# EUROPÄISCHE PATENTSCHRIFT

(11) **EP 3 628 611 B1**
(45) Veröffentlichungstag und Bekanntmachung des Hinweises auf die Patenterteilung: **12.07.2023**
(21) Anmeldenummer: 19194524.5
(22) Anmeldetag: 30.08.2019
(51) Int. Cl.: B65G 53/46, B65G 65/48

(54) **ZELLENRADSCHLEUSE FÜR GRANULATFÖRMIGES SCHÜTTGUT**
CELLULAR WHEEL LOCK FOR GRANULAR BULK MATERIAL
ÉCLUSES À ROUE CELLULAIRE POUR LE PRODUIT EN VRAC GRANULAIRE

(30) Priorität: 27.09.2018 DE 102018216654
(43) Veröffentlichungstag der Anmeldung: 01.04.2020
(73) Patentinhaber: Coperion GmbH, 70469 Stuttgart (DE)
(72) Erfinder: Adomeit, Holger, 88213 Ravensburg-Dürnast (DE); Walter, Michael, 88348 Bad Saulgau (DE); Zinser, Bruno, 88289 Waldburg (DE)
(74) Vertreter: Rau, Schneck & Hübner Patentanwälte Rechtsanwälte PartGmbB

(56) Entgegenhaltungen:
- CN-A- 106 429 249
- DE-A1- 2 806 059
- DE-C1- 4 228 014
- GB-A- 1 385 332
- JP-U- S6 259 622
- US-A- 4 537 333
- US-A1- 2013 146 797

## Beschreibung

Die Erfindung betrifft eine Zellenradschleuse für granulatförmiges Schüttgut.

Die JP S62-059622 U offenbart eine Zellenradschleuse, an deren Einlaufschacht am Gehäuse ein Granulatdach angeordnet ist, wobei am Übergang zwischen einem Granulatdach und dem Einlaufschacht eine Granulatnut vorgesehen ist. Ähnliche Zellenradschleusen sind bekannt aus DE 42 28 014 C1, US 2013/146797 A1 und CN 106 429 249 A. Durch die Granulatnut wird das Risiko reduziert, dass ein Granulatkorn des Schüttguts in die bereits weitgehend gefüllte Kammer des Zellenrads fällt und zwischen Gehäusekante und Rotorblatt abgeschert und/oder abgeschnitten wird. An dem Nutauslauf, an dem die Nut endet, kann dennoch ein Hacken, also eine Zerstörung, des Granulatkorns auftreten. Der Nutauslauf wird als Schnittpunkt bezeichnet.

DE 28 06 059 A1, US 4,537,333 A und GB 1 385 332 A offenbaren jeweils Zellenradschleusen mit mehreren Granulatdächern. Insbesondere offenbart DE 28 06 059 A1 eine Zellenradschleuse gemäß dem Oberbegriff des Anspruchs 1.

Es ist eine Aufgabe der vorliegenden Erfindung, eine Zellenradschleuse mit verbessertem Einlaufverhalten für das granulatförmige Schüttgut zu schaffen, wobei insbesondere die Beschädigung des Schüttguts reduziert ist.

Diese Aufgabe ist erfindungsgemäß gelöst durch eine Zellenradschleuse mit den im Anspruch 1 angegebenen Merkmalen.

Erfindungsgemäß wurde erkannt, dass das Einlaufverhalten für Schüttgut in eine Zellenradschleuse verbessert werden kann, wenn eine Oberfläche am Einlaufschacht vergrößert ist. Erfindungsgemäß sind mindestens zwei erhabene Granulatdächer am Einlaufschacht angeordnet. Das jeweilige Granulatdach ist insbesondere nasenförmig ausgeführt.

In einer Blickrichtung von oben in den Einlaufschacht ist das Granulatdach dreieckförmig ausgeführt. Das Granulatdach verbessert das Einlaufverhalten von granulatförmigem Schüttgut. Um eine Beschädigung des Schüttguts zu reduzieren, sind jeweils zwei Granulatnuten, die am Übergang zwischen zwei Granulatdächern und am Übergang zwischen einem Granulatdach und einer Einlaufkante jeweils angeordnet sind, in jeweils einem Schnittpunkt zusammengeführt. Als Einlaufkante werden Kanten am Einlaufschacht bezeichnet, über die Granulatkörner aus dem Einlaufschacht in die Zylinderbohrung des Gehäuses der Zellenradschleuse zugeführt werden. Die Einlaufkante ist insbesondere am Übergang zu dem Einlaufschacht angeordnet. Über die Einlaufkante kann das granulatförmige Schüttgut in die Kammer des Zellenrads gelangen. Damit wird erreicht, dass trotz der Erhöhung der Oberfläche im Einlaufschacht die Anzahl der Schnittpunkte nicht linear ansteigt. Erfindungsgemäß ist das Verhältnis von Oberfläche am Einlaufschacht bezogen auf die Anzahl der Schnittpunkte, insbesondere überproportional, erhöht. Eine Zellenradschleuse mit drei Granulatdächern weist insbesondere nur zwei Schnittpunkte auf.

Mit der erfindungsgemäßen Zellenradschleuse ist die Förderleistung erhöht und das Schnittverhalten bzw. das Hackverhalten reduziert. Eine wesentliche Erkenntnis beruht darauf, dass eine Oberfläche eines groß ausgeführten Granulatdaches auf mehrere, vergleichsweise kleinere Granulatdächer aufgeteilt werden kann. Beispielsweise können zwei Granulatdächer, drei Granulatdächer, vier Granulatdächer oder fünf Granulatdächer oder mehr vorgesehen sein. Die Granulatdächer sind entlang einer Breite des Einlaufschachts nebeneinander angeordnet. Die Breite des Einlaufschachts ist parallel zur Drehachse des Zellenrads orientiert. Insbesondere beträgt die vergrößerte Oberfläche am Einlaufschacht zwischen 110 % und 150 % der Oberfläche einer Zellenradschleuse gleicher Bauart mit nur einem Granulatdach, insbesondere zwischen 120 % und 140 % und insbesondere zwischen 125 % und 135 %. Die erfindungsgemäße Schleuse kann auch bei hohen Drehzahlen, insbesondere Rotorumfangsgeschwindigkeiten von mindestens 1 m/s und insbesondere von mindestens 2 m/s, zuverlässig und fehlersicher befüllt werden. Der Füllgrad der einzelnen Kammern des Zellenrads ist verbessert. Der Massendurchsatz der Zellenradschleuse ist erhöht.

Das Gehäuse der Zellenradschleuse weist eine Zylinderbohrung auf, die auch als Innenraum der Zellenradschleuse bezeichnet wird.

Eine Zellenradschleuse gemäß Anspruch 2 ermöglicht ein konstantes Abdrängungsverhalten des Zellenrades. Es wurde gefunden, dass für das Abdrängungsverhalten des Granulatkorns in der Granulatnut der Abdrängungswinkel ein relevanter Parameter ist, der insbesondere von der Drehposition des Zellenrades im Gehäuse der Zellenradschleuse abhängt. Es wurde gefunden, dass das konstante Abdrängungsverhalten erreicht wird, wenn der Abdrängungswinkel zumindest abschnittsweise konstant ist. Insbesondere ist der Abdrängungswinkel über mindestens 50 % der Gesamtlänge der Granulatnut, insbesondere über 60 % der Gesamtlänge der Granulatnut, insbesondere über 70 % der Gesamtlänge der Granulatnut, insbesondere über 80 % der Gesamtlänge der Granulatnut, insbesondere über 90 % der Gesamtlänge der Granulatnut, insbesondere über 95 % der Gesamtlänge der Granulatnut und insbesondere entlang der Gesamtlänge der Granulatnut konstant. Dadurch ist es möglich, den Gehäusewinkel, der für die Granulatnut erforderlich ist, zu verkleinern, um insbesondere den Einlaufquerschnitt der Zellenradschleuse zu vergrößern. Eine derartige Schleuse weist eine erhöhte Förderleistung auf.

Zusätzlich oder alternativ kann bei einer Zellenradschleuse gemäß Anspruch 3 der Abdrängungswinkel in Drehrichtung des Zellenrades zumindest abschnittsweise ansteigen. Der Anstieg kann beispielsweise linear oder progressiv erfolgen. Der Anstieg kann auch durchgängig entlang der gesamten Granulatnutlänge erfolgen. Beispielsweise kann der Abdrängungswinkel zu Beginn der Granulatnut mindestens 35° betragen und am Ende der Granulatnut, insbesondere am Schnittpunkt, höchstens 70° betragen. Eine derartige Granulatnut kann in einer Projektion in die horizontale Ebene aufgrund der gekrümmten Oberfläche an der Innenseite der Zylinderbohrung so erscheinen, als ob der Abdrängungswinkel konstant ist. Tatsächlich ist der Abdrängungswinkel aber abschnittsweise ansteigend in Drehrichtung des Zellenrads ausgeführt.

Eine Zellenradschleuse gemäß Anspruch 4 weist ein verbessertes Förderverhalten auf. Ein Hacken der Granulatkörner ist im Wesentlichen verhindert.

Eine Granulatnut gemäß Anspruch 5 ermöglicht ein vorteilhaftes - Abdrängen des Schüttguts entlang der Granulatnut. Die Querschnittsfläche der Granulatnut ist im Wesentlichen beliebig wählbar. Die Querschnittsfläche kann quadratisch, rechteckig oder dreieckig, insbesondere mit abgerundeter Spitze, ausgeführt sein. Es sind auch andere, insbesondere abgerundete, Querschnittsformen für die Granulatnut denkbar.

Die Ausführung einer Granulatnut gemäß Anspruch 6 verbessert das Abdrängungsverhalten für das Granulatkorn in der Zellenradschleuse. Es wurde gefunden, dass eine scharfkantige Ausführung der Granulatnut vom Innenraum der Zellenradschleuse her gesehen vermieden werden soll.

Eine Granulatnut gemäß Anspruch 7 ermöglicht eine vorteilhafte Herstellung des Gehäuses. Beim Gießen des Gehäuses kann insbesondere ein Kernteil eingespart werden.

Bei einer Zellenradschleuse gemäß Anspruch 8 ist das Risiko der Beschädigung des Granulatkorns zusätzlich reduziert. Die integrale Länge aller Granulatnuten ist vergrößert, so dass ein Gleiten der Granulatkörner entlang der Granulatnut bis zum Schnittpunkt vermieden werden kann.

Alternativ ermöglicht eine Ausführung einer Zellenradschleuse gemäß Anspruch 9 eine erhöhte Förderleistung. Die Einlauffläche der Zellenradschleuse ist vergleichsweise groß und ermöglicht einen vergrößerten Schüttgutmassestrom in die Zellenradschleuse durch den Einlaufschacht.

Eine Zellenradschleuse gemäß Anspruch 10 ermöglicht eine verbesserte Abschiebewirkung auf das in den Einlaufschacht fallende granulatförmige Schüttgut. Die Wahrscheinlichkeit, dass ein Granulatkorn zwischen die Nasenspitze, also das vordere Ende des Granulatdachs, und den Zellenradsteg geraten kann, ist reduziert. Das Risiko, dass ein Hacken des Schüttguts an dieser Stelle erfolgt, ist reduziert.

Ausführungsbeispiele der Erfindung werden nachfolgend anhand der Zeichnung näher erläutert. In dieser zeigen:
- Fig. 1: eine Draufsicht auf eine erfindungsgemäße Schleuse ohne Zellenrad mit Blick in den Einlaufschacht,
- Fig. 2: eine Schnittdarstellung gemäß Schnittlinie II-II in Fig. 1,
- Fig. 3: eine vergrößerte Darstellung des Details III in Fig. 2,
- Fig. 4: eine Schnittdarstellung gemäß Schnittlinie IV-IV in Fig. 2,
- Fig. 5: eine Seitenansicht einer Zellenradschleuse gemäß einer weiteren Ausführungsform mit Kennzeichnung verschiedener Ansichtsebenen,
- Fig. 6: eine Darstellung der Gehäuseinnenseite der Zellenradschleuse gemäß Fig. 5 gemäß der Ansicht VI-VI
- Fig. 7: eine Fig. 6 entsprechende Darstellung gemäß der Ansicht VII - VII in Fig. 5,
- Fig. 8: eine Fig. 6 entsprechende Darstellung gemäß der Ansicht VIII - VIII in Fig. 5,
- Fig. 9: eine Fig. 4 entsprechende Ansicht einer Zellenradschleuse gemäß einer weiteren Ausführungsform,
- Fig. 10: eine Fig. 3 entsprechende Darstellung einer Granulatnut einer Zellenradschleuse gemäß einem weiteren Ausführungsbeispiel,
- Fig. 11: eine Fig. 10 entsprechende Detaildarstellung einer Granulatnut einer Zellenradschleuse gemäß einer weiteren Ausführungsform.

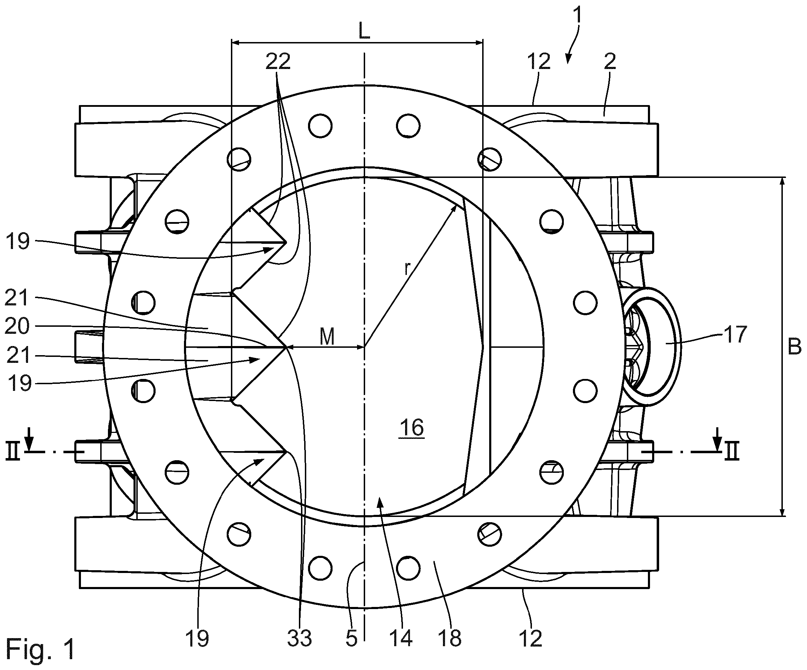

Eine in Fig. 1 bis 8 dargestellte, als Ganzes mit 1 bezeichnete Zellenradschleuse dient zur dosierten Förderung von granulatförmigem Schüttgut, insbesondere Kunststoffgranulat.

Die Zellenradschleuse 1 umfasst ein Gehäuse 2 mit einer zylindrischen Bohrung 3, in der koaxial ein Zellenrad 4 drehantreibbar um eine Drehachse 5 angeordnet ist. Die Zylinderbohrung 3 bildet den Innenraum des Gehäuses 2.

Das Zellenrad 4 weist eine Zellenradwelle 6 und mehrere, bezüglich der Drehachse 5 an der Zellenradwelle 6 radial orientiert angebrachte Zellenradstege 7 auf. Die Zellenradstege 7 sind in Drehrichtung 8 um die Drehachse 5 jeweils gleich beabstandet zueinander angeordnet. Zwischen der Zellenradwelle 6, zwei benachbarten Zellenradstegen 7 und einer inneren Mantelfläche 9 der Zylinderbohrung 3 wird eine Zellenradkammer 10 begrenzt, in die das granulatförmige Schüttgut zur Förderung dosiert wird.

Gemäß dem gezeigten Ausführungsbeispiel weist das Zellenrad 4 zwölf Zellenradstege 7 auf, so dass zwölf Zellenradkammern 10 gebildet sind. Die Anzahl der Zellenradstege 7 kann je nach Einsatzzweck des Zellenrads 4 größer oder kleiner gewählt werden, um entsprechend eine feinere oder gröbere Aufteilung der Zellenradkammern 10 einzustellen.

Das Gehäuse 2 ist stirnseitig entlang der Drehachse 5 mit jeweils einem nicht dargestellten Seitendeckel abgedichtet verschließbar. Dazu weist das Gehäuse 2 jeweils einen stirnseitig angeordneten, am Gehäuse 2 integriert ausgeführten Verbindungsflansch 12 auf. An dem Verbindungs- oder Seitenflansch 12 sind mehrere, nicht gezeigte Befestigungsbohrungen vorgesehen, um den Gehäusedeckel am Seitenflansch 12 mittels Befestigungsschrauben lösbar und abgedichtet anzubringen. Dazu kann zwischen dem Seitenflansch 12 und dem Seitendeckel eine Dichtung, insbesondere ein O-Ring oder eine Flachdichtung, angeordnet sein.

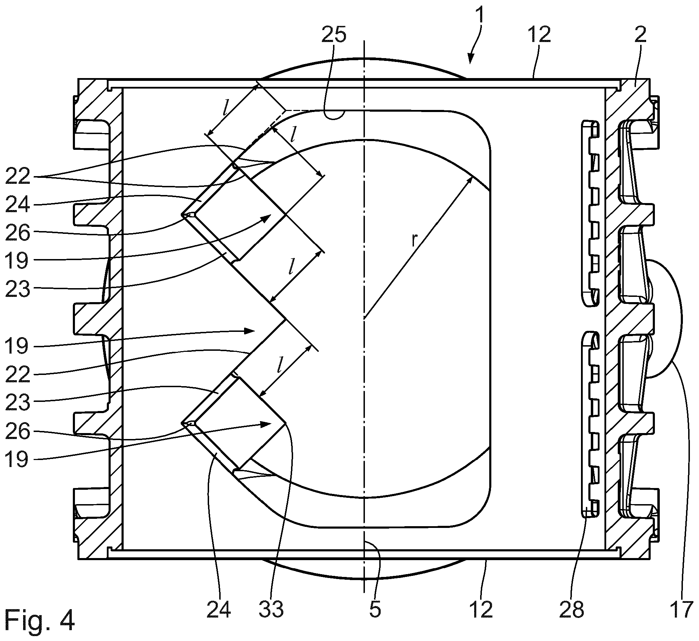

An der Außenseite des Gehäuses 2 ist ein Leckluftstutzen 17 angeordnet, der über einen Leckluftkanal 28 mit der Zylinderbohrung 3 verbunden ist. Der Leckluftkanal 28 kann bereichsweise zwei parallel zueinander verlaufende Stränge aufweisen, die in Fig. 4 dargestellt sind. Der Leckluftkanal 28 kann zusätzlich oder alternativ nicht dargestellte Einbauten zur Schallreduktion aufweisen.

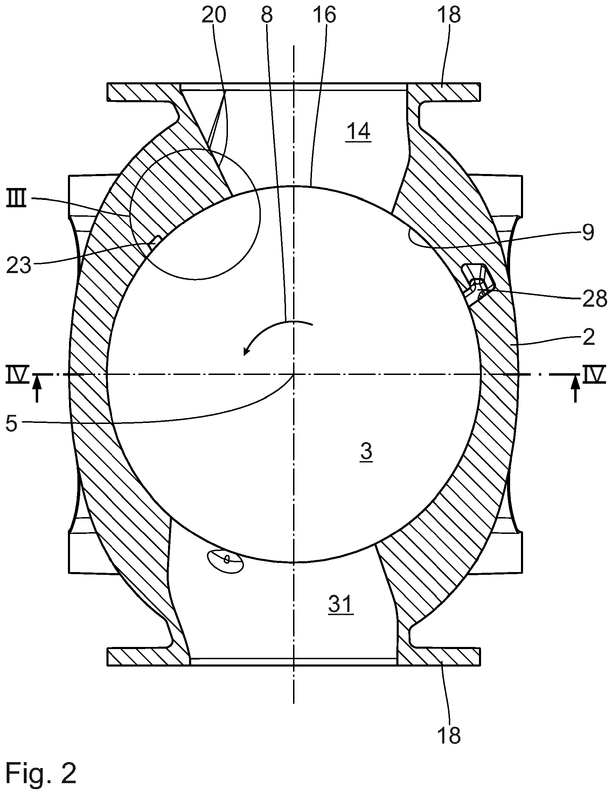

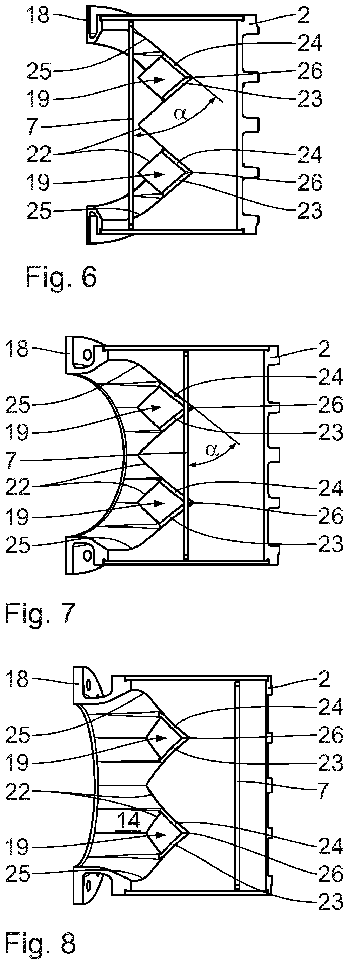

Das Gehäuse 2 weist einen Einlaufschacht 14 auf, über den das Schüttgut der Zellenradschleuse 1, insbesondere der Zylinderbohrung 3, mit dem Zellenrad 4 zugeführt wird. In einer Einbauposition der Zellenradschleuse 1, wie in Fig. 2 und 7 dargestellt, ist der Einlaufschacht 14 oben angeordnet, so dass das zugeführte Schüttgut schwerkraftbedingt selbsttätig in die Zylinderbohrung 3 gefördert wird. Der Einlaufschacht 14 weist eine Einlaufschräge 15 auf, entlang der das granulatförmige Schüttgut in die Zylinderbohrung 3 fließt. Der Einlaufschacht 14 ist mit der Zylinderbohrung 3 über eine Einlauföffnung 16 verbunden. Die Einlauföffnung 16 weist eine parallel zur Drehachse 5 orientierte Breite B auf. In einer Projektion der Einlauföffnung 16 in eine Horizontalebene gemäß Fig. 1 weist die Einlauföffnung 16 eine senkrecht zur Breite B orientierte Länge L auf.

An seinem oberen Ende weist der Einlaufschacht 14 einen Verbindungsflansch 18 auf, der entsprechend den stirnseitig angeordneten Verbindungsflanschen 12 ausgeführt ist. An dem Verbindungsflansch 18 des Einlaufschachts 14 sind gemäß dem gezeigten Ausführungsbeispiel sechszehn Befestigungsbohrungen 13 vorgesehen.

An dem Einlaufschacht 14, insbesondere entlang der Einlaufschräge 15, sind drei nasenförmige Granulatdächer 19 angeordnet. Die Granulatdächer 19 sind gegenüber der Einlaufschräge 15 erhaben ausgeführt. Die Granulatdächer 19 bewirken eine Vergrößerung der Oberfläche der Einlaufschräge 15 im Einlaufschacht 14. Die Granulatdächer 19 sind in der Art eines gleichseitigen Satteldaches an der Einlaufschräge 15 angeordnet. Die Granulatdächer 19 erstrecken sich von der Einlaufschräge 15 gaubenartig. Jedes Granulatdach 19 weist einen First 20 und zwei jeweils mit einem Neigungswinkel η gegenüber einer Vertikalebene, die insbesondere senkrecht zur Drehachse 5 orientiert ist, geneigt angeordneten Langfläche 21 auf. Die freien Kanten der Langflächen 21, die der Einlaufschräge 15 abgewandt angeordnet sind, werden als Abweiskanten 22 bezeichnet. Die Abweiskante 22 wird auch als Einlaufkante bezeichnet.

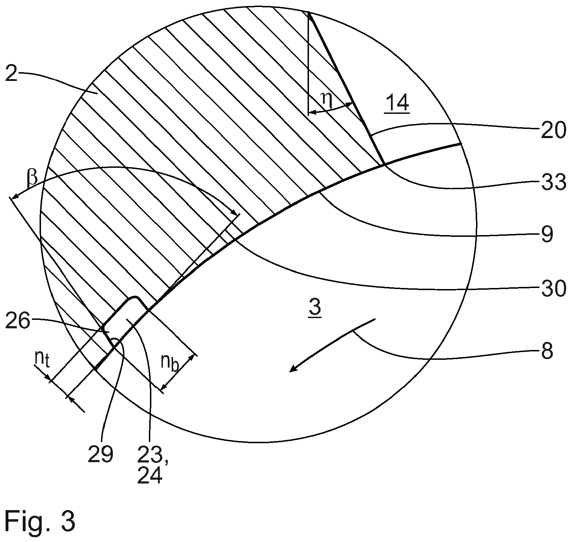

Die Granulatdächer 19 erstrecken sich an der Einlaufschräge 15 im Einlaufschacht 14 bis zur Zellenradbohrung 3, wie dies insbesondere in Fig. 2 und im Detail in Fig. 3 dargestellt ist. Die Granulatdächer 19 weisen jeweils als vordere Kante den First 20 auf, der an einer unteren, vorderen Spitze 33 ausläuft. Die Spitze 33 ist der Zylinderbohrung 3 zugewandt und stellt den Übergang zwischen der Einlaufschräge 15 mit dem Granulatdach 19 zu der Zylinderbohrung 3 dar

Die Granulatdächer 19 sind entlang der Breitenrichtung, also in einer Richtung parallel zur Drehachse 5, nebeneinander angeordnet. Die Granulatdächer 19 sind an der Einlaufschräge 15 derart angeordnet, dass der jeweilige First 20 quer und insbesondere senkrecht zur Drehachse 5 orientiert ist.

In jeweils einem Übergangsbereich zwischen zwei benachbarten Granulatdächern 19 ist eine erste Granulatnut 23 ausgebildet. Die erste Granulatnut 23 ist insbesondere als nutartige Vertiefung an einer virtuellen Stoßkante der jeweiligen Langflächen 21 der benachbarten Granulatdächer 19 angeordnet. Jeweils an einer Außenseite der außenliegenden Granulatdächer 19, also in einem Übergangsbereich zwischen dem jeweils außenliegenden Granulatdach 19 und einer inneren Begrenzungswand des Einlaufschachts 14, ist eine zweite Granulatnut 24 angeordnet, die im Wesentlichen identisch zu der ersten Granulatnut 23 ausgeführt ist. Die Begrenzungswand weist eine obere, dem Einlaufschacht 14 zugewandte Begrenzungskante 25 auf. Die Begrenzungskante 25 bildet eine Einlaufkante.

Die Granulatnuten 23, 24 sind jeweils als nutförmige Vertiefung an der Mantelfläche 9 der Zylinderbohrung 3 ausgeführt. Die Granulatnuten 23, 24 erstrecken sich in Drehrichtung 8 des Zellenrades 4. Jeweils zwei Granulatnuten 23, 24 laufen in einem Schnittpunkt 26 zusammen. Der Schnittpunkt 26 ist nicht als Punkt im geometrischen Sinne zu verstehen. Es handelt sich hierbei um die Verbindungsstelle zweier Nuten, insbesondere ein Verbindungsbereich, beispielsweise eine Schnittebene und/oder eine Kante, wie insbesondere in Fig. 4 dargestellt.

Dadurch, dass die Granulatnuten 23, 24 jeweils paarweise zu einem Schnittpunkt 26 zusammengeführt sind, ist die Anzahl der Schnittpunkte, nämlich zwei, insbesondere bezogen auf die Gesamt-Anzahl der Granulatdächer 19, nämlich drei, reduziert. Die Zellenradschleuse 1 optimiert die Anzahl der Granulatdächer 19 zu der der Schnittpunkte 26.

Gemäß dem gezeigten Ausführungsbeispiel ist die Oberfläche im Bereich des Einlaufschachts durch die Granulatdächer 19 um mindestens 20 %, insbesondere mindestens 25 % und insbesondere mindestens 30 % gegenüber einer vergleichbaren Zellenradschleuse mit nur einem Granulatdach vergrößert.

Gemäß dem gezeigten Ausführungsbeispiel sind sämtliche Granulatdächer 19 identisch ausgeführt. Die Abweiskanten 22 eines Granulatdaches 19 weisen jeweils gleiche Längen 1 auf. Die Abweiskanten 22 der verschiedenen Granulatdächer 19 weisen ebenfalls gleiche Längen 1 auf. Insbesondere sind die Granulatdächer 19 entlang der Drehachse 5 gleich verteilt angeordnet. Das bedeutet, dass die Abweiskanten 22, die vom Einlaufschacht 14 zu den jeweils außen angeordneten Granulatdächern 19 angeordnet sind, eine identische Länge 1 aufweisen wie die Längen der Abweiskanten 22 der Granulatdächer 19 selbst. Die Granulatdächer 19 sind entlang der Drehachse 5 gleichverteilt angeordnet. Durch diese Ausführung sind die Granulatdächer 19 vergleichsweise größer ausgeführt, weisen also eine größere Dachfläche auf. Entsprechend sind die Granulatnuten 23, 24 vergleichsweise länger ausgeführt, so dass das Hackverhalten der Zellenradschleuse 1 zusätzlich verbessert ist. Das Risiko, dass Granulatkörner beim Eintritt in die Zellenradschleuse 1, insbesondere in die Zylinderbohrung 3, gequetscht oder geschnitten werden, ist reduziert.

In der Schnittdarstellung gemäß Fig. 3 ist der Schnittpunkt 26 mit beiden zusammenlaufenden Granulatnuten 23, 24, dargestellt. In dieser Darstellung ist die Querschnittsform der Granulatnut 23, 24 gezeigt. Die Querschnittsfläche der Granulatnut 23, 24 ist im Wesentlichen rechteckförmig mit einer Nuttiefe nt und einer Nutbreite n_{b}. Gemäß dem gezeigten Ausführungsbeispiel ist die Nutbreite n_{b} größer als die Nuttiefe nt, insbesondere n_{b} ≥ 1,2 . nₜ, insbesondere n_{b} ≥ 1,5 · nₜ. Die Querschnittsfläche der Granulatnut 23, 24 ist insbesondere derart bemessen, dass ein Granulatkorn mittlerer Granulatgröße kontaktfrei, also ohne an den Seitenflächen der Granulatnut 23, 24 noch an einem Zellenradsteg 7, der an der Öffnung der Granulatnut 23, 24 vorbeibewegt wird, anliegen zu müssen.

Insbesondere ist die minimale lichte Weite der Granulatnut 23, 24, die gemäß dem gezeigten Ausführungsbeispiel der Nuttiefe nt entspricht, größer als der größte Partikeldurchmesser der Granulatkörner. Dadurch ist ein freier Transport der Granulatkörner entlang der Granulatnut 23, 24 gewährleistet.

Gemäß dem gezeigten Ausführungsbeispiel weist die Granulatnut 23, 24 entlang des Nutverlaufs eine konstante Querschnittsfläche auf.

Die Granulatnut 23, 24 ist, insbesondere am Schnittpunkt 26, mit einem Öffnungswinkel β gegenüber der Zylinderbohrung 3 des Gehäuses 2 angeordnet, wobei der Öffnungswinkel kleiner oder gleich 120° beträgt. Vorteilhaft ist es, wenn der Öffnungswinkel zwischen 80° und 120° beträgt, insbesondere zwischen 90° und 110°.

Der Öffnungswinkel β wird durch die in Drehrichtung 8 hintere Seitenkante 29 der Granulatnut 23, 24 und der Tangente 30 an der Mantelfläche der Zylinderbohrung 3 am Schnittpunkt mit der hinteren Seitenkante 29 definiert.

An einer Unterseite des Gehäuses 2 weist die Zellenradschleuse 1 einen Auslaufschacht 31 auf. Der Einlaufschacht 14 und der Auslaufschacht 31 sind bezüglich der Drehachse 5 gegenüberliegend zueinander angeordnet. Über den Auslaufschacht 31 kann das mittels des Zellenrads 4 dosiert geförderte Schüttgut aus der Zellenradschleuse 1 abgegeben werden. Zur Verbindung der Zellenradschleuse 1 mit Förderkomponenten und/oder -leitungen weist das Gehäuse 2 stirnseitig unten am Auslaufschacht 31 einen weiteren Verbindungsflansch 18 auf, der im Wesentlichen identisch mit dem Verbindungsflansch 18 am Einlaufschacht 14 ausgeführt ist.

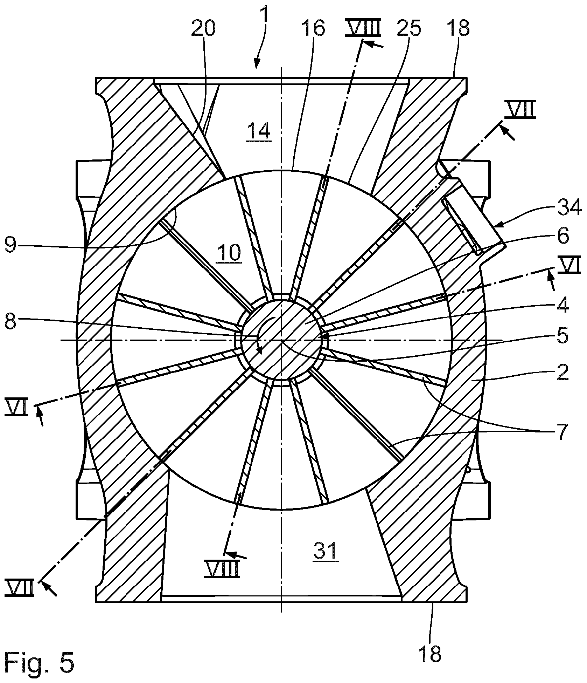

Nachfolgend wird anhand von Fig. 5 bis 8 ein Abdrängungswinkel α und dessen Funktion näher erläutert. Fig. 6 bis 8 zeigen jeweils eine Ansicht aus dem Zentrum, also der Drehachse 5, der Zylinderbohrung 3 auf eine Unterseite der Einlaufschräge 15 mit den Granulatdächern 19. In den Darstellungen ist jeweils auch ein Zellenradsteg 7 dargestellt. Wesentlich bei den Darstellungen in Fig. 6 bis 8 ist, dass es sich nicht um eine vertikale Ansicht handelt, sondern die Ansicht jeweils in radialer Richtung bezogen auf die Drehachse 5 erfolgt. Die Darstellungen gemäß Fig. 6 bis 8 berücksichtigen also die jeweilige Drehposition des Zellenrads 4 bzw. des Zellenradstegs 7 bezüglich der Granulatnuten 23, 24. Der Abdrängungswinkel α ist zwischen der Granulatnut 23, 24 und dem Zellradsteg 7 eingeschlossen.

Es wurde gefunden, dass es vorteilhaft ist, wenn der Abdrängungswinkel α größer oder gleich 30° ist. Besonders vorteilhaft ist es, wenn der Abdrängungswinkel α unabhängig von der Drehposition des Zellenrades 4 größer oder gleich 30° ist. Gemäß dem gezeigten Ausführungsbeispiel ist der Abdrängungswinkel α unabhängig von der Drehposition des Zellenrades 45°. Der Abdrängungswinkel α kann auch größer oder kleiner als 45° sein.

Insbesondere wurde gefunden, dass es nicht erforderlich ist, dass der Abdrängungswinkel α in der Draufsicht auf die Granulatnut 23, 24 und/oder die Abweiskante 22 einen konstanten Verlauf hat. Insbesondere kann der Abdrängungswinkel α sich in der Granulatnut 23, 24, zum Schnittpunkt 26 hin, kontinuierlich vergrößern.

Insbesondere ist der Abdrängungswinkel α für alle Abweiskanten 22 ähnlich und insbesondere identisch. Ein ähnlicher Abdrängungswinkel α bedeutet, dass Winkelabweichungen zwischen verschiedenen Abdrängungswinkeln α höchstenst 5°, insbesondere höchstens 3° und insbesondere höchstens 1° betragen. Das bedeutet, dass im Einlaufschacht 14 alle Abweiskanten 22 gleich, insbesondere identisch definiert sind. Die Abweiskanten 22 laufen insbesondere in Drehrichtung 8 des Zellenrades 4.

Bei der gezeigten Zellenradschleuse 1 ist es somit möglich, den Abdrängungswinkel α zu reduzieren. Dadurch, dass der Abdrängungswinkel α reduziert ist und insbesondere kleiner ist als 45°, ist die Einlauföffnung vergrößert. Dadurch kann die Zellenradschleuse 1 mit erhöhtem Durchsatz, also mit mehr Leistung, betrieben werden.

Ein Mittenabstand M der vorderen Spitzen 33 der Einlaufschrägen 19 von der Drehachse 5 ist gemäß diesem Ausführungsbeispiel vergleichsweise Groß gegenüber einer aus der US 5,129,554 bekannten Zellenradschleuse mit nur einem Granulatdach. Der Mittenabstand M ist kleiner als ein Radius r der Kreisbohrung des Einlaufschachts 14 bzw. des Auslaufschachts 31. Insbesondere gilt: M < r, insbesondere M < 0,8 · r, insbesondere M < 0,6 · r, und insbesondere M < 0,5 · r.

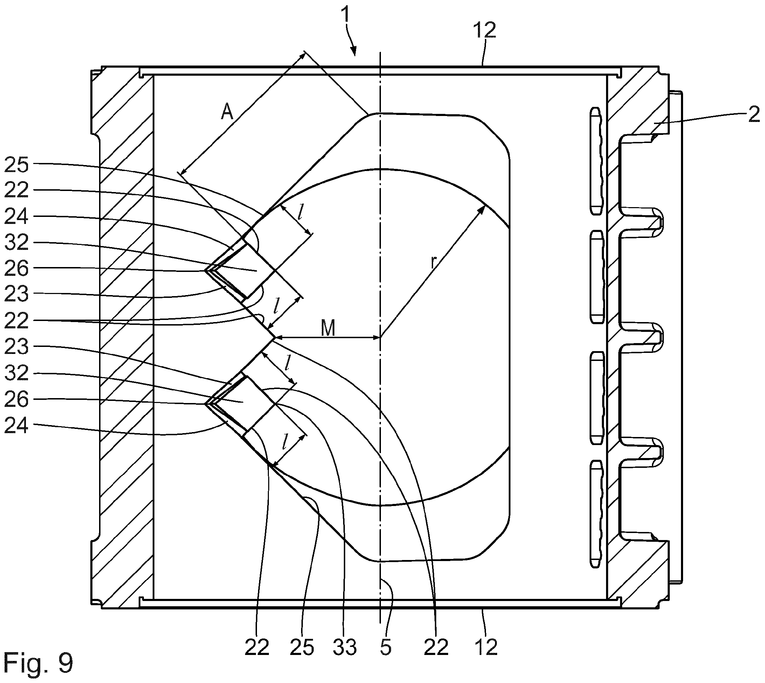

Fig. 9 zeigt eine weitere Ausführung einer Zellenradschleuse 1. Komponenten, die denjenigen entsprechen, die vorstehend unter Bezugnahme auf die Fig. 1 bis 8 bereits erläutert wurden, tragen die gleichen Bezugsziffern und werden nicht nochmals im Einzelnen diskutiert.

Bei der Zellenradschleuse 1 sind die Granulatdächer 32 vergleichsweise kleiner ausgeführt. Das bedeutet, dass die Länge 1 der Abweiskanten 22 der Granulatdächer 32 kleiner ist als bei dem vorherigen Ausführungsbeispiel. Zudem ist ein seitlicher Abstand A der Abweiskanten 22 der Granulatdächer 32 zu der seitlichen Einlaufkante 25 größer als die jeweilige Länge 1 der Abweisenkanten 22. Insbesondere gilt: A ≥ 1,5 · 1, insbesondere A ≥ 2 · 1 und insbesondere A ≥ 2,5 · 1.

Bei dem gezeigten Ausführungsbeispiel beträgt der Mittenabstand M zu der vorderen Spitze 33 von der Drehachse 5 mindestens 0,45 · r. Insbesondere gilt: M ≥ 0,48 · r, insbesondere M ≥ 0,5 · r und insbesondere M ≥ 0,525 · r.

Bei dieser Ausführungsform ist die Einlauföffnung 16 zu einem größeren Anteil freigegeben. Das bedeutet, dass die freie Durchströmfläche der Einlauföffnung 16 bei diesem Ausführungsbeispiel vergrößert ist. Die Leitungsfähigkeit dieser Zellenradschleuse ist vergrößert.

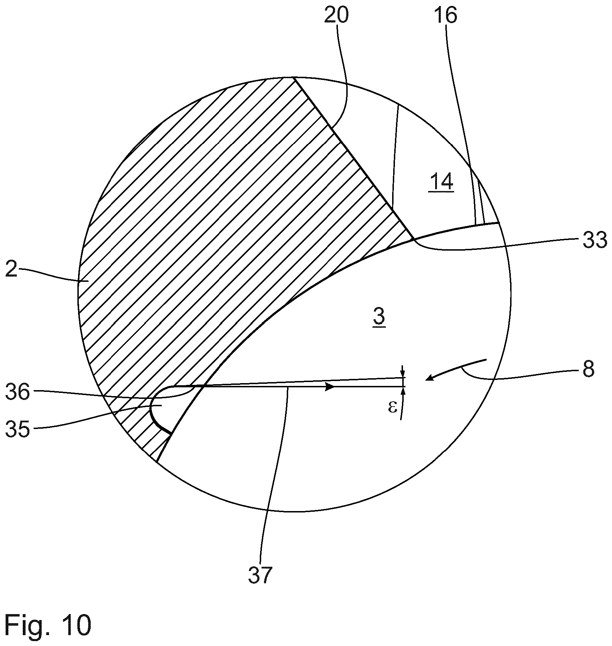

Gemäß dem gezeigten Ausführungsbeispiel in Fig. 10 weist die Granulatnut 35 eine im Wesentlichen abgerundete Kontur auf. Zudem weist die Granulatnut 35 eine Entformungsschräge ε auf, mit der die obere, in Drehrichtung 8 vordere Nutkante 36 gegenüber der Zylinderbohrung 3 zusätzlich geöffnet ist. Die Entformungsschräge beträgt gemäß dem gezeigten Ausführungsbeispiel etwa 1°. Durch die Gestaltung der Granulatnut 35 mit der Entformungsschräge ε kann das Gehäuse 2 bei der gießtechnischen Herstellung in der Entformungsrichtung 37 unmittelbar entformt werden. Dadurch kann für den Gießprozess ein weiteres Kernteil eingespart werden. Die gießtechnische Herstellung des Gehäuses 2 mit der Granulatnut 35 mit Entformungsschräge ε ist vereinfacht. Insbesondere ist die Entformungsschräge ε der Winkel, der zwischen der vorderen Kante 36 der Granulatnut 35 und der Entformungsrichtung 37 gebildet wird.

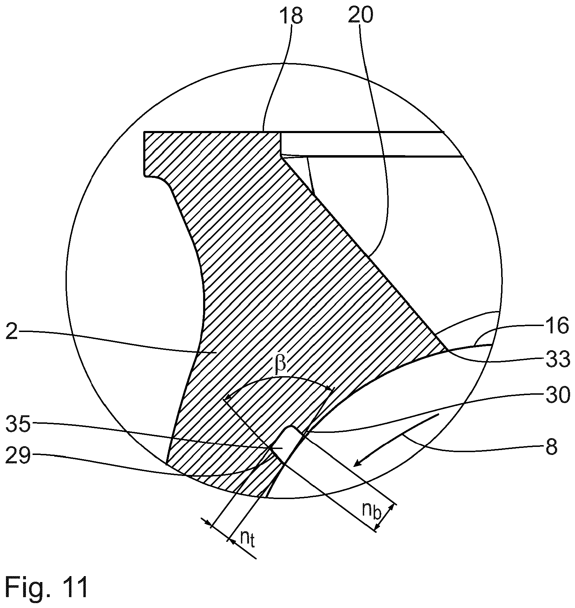

Fig. 11 zeigt eine weitere Ausführung der Granulatnut 35, die im Wesentlichen der Ausführung gemäß Fig. 3 entspricht, wobei die Nuttiefe nt vergrößert ist, so dass die Granulatnut 35 annähernd eine quadratische Querschnittsfläche aufweist.

Der Öffnungswinkel β ist entsprechend dem Ausführungsbeispiel in Fig. 3 gewählt.

## Patentansprüche

1. Zellenradschleuse für granulatförmiges Schüttgut mit einem Gehäuse (2), in dem ein Zellenrad (4) drehbar gelagert ist, wobei das Gehäuse (2) einen Einlaufschacht (14) für das Schüttgut aufweist, wobei an dem Einlaufschacht (14) mindestens zwei erhabene Granulatdächer (19; 32) angeordnet sind,
**dadurch gekennzeichnet, dass**
- am Übergang zwischen zwei Granulatdächern (19; 32) und am Übergang zwischen einem Granulatdach (19; 32) und einer Einlaufkante (22, 25) jeweils eine Granulatnut (23, 24; 35) angeordnet ist,
- jeweils zwei Granulatnuten (23, 24; 35) in Drehrichtung des Zellenrades (4) in einem Schnittpunkt (26) zusammenlaufen.

2. Zellenradschleuse gemäß Anspruch 1, **dadurch gekennzeichnet, dass** ein zwischen der Granulatnut (23, 24; 35) und einem Zellenradsteg (7) eingeschlossener Abdrängungswinkel (α) unabhängig von der Drehposition des Zellenrades (4) zumindest abschnittsweise konstant ist.

3. Zellenradschleuse gemäß einem der vorstehenden Ansprüche, **dadurch gekennzeichnet, dass** ein zwischen der Granulatnut (23, 24; 35) und einem Zellenradsteg (7) eingeschlossener Abdrängungswinkel (α) in Drehrichtung (8) des Zellenrads (4) zumindest abschnittsweise zunimmt.

4. Zellenradschleuse gemäß Anspruch 2 oder 3, **dadurch gekennzeichnet, dass** für den Abdrängungswinkel (α) gilt: 30° ≤ α ≤ 90°, insbesondere 30° ≤ α ≤ 80°, insbesondere 30° ≤ α ≤ 70°, insbesondere 30° ≤ α ≤ 60°, insbesondere 35° ≤ α ≤ 50° und insbesondere 40° ≤ α ≤ 45°.

5. Zellenradschleuse gemäß einem der vorstehenden Ansprüche, **dadurch gekennzeichnet, dass** die Granulatnut (23, 24; 35) entlang des Nutverlaufs eine konstante Querschnittsfläche aufweist.

6. Zellenradschleuse gemäß einem der vorstehenden Ansprüche, **dadurch gekennzeichnet, dass** die Granulatnut (23, 24; 35) einen gegenüber einem Innenraum (3) des Gehäuses (2) orientierten Öffnungswinkel (β) aufweist, wobei gilt 80° ≤ β ≤ 120°, insbesondere 90° ≤ β ≤ 110°.

7. Zellenradschleuse gemäß einem der vorstehenden Ansprüche, **dadurch gekennzeichnet, dass** die Granulatnut (23, 24; 35) eine dem Innenraum (3) des Gehäuses (2) zugewandte Entformungsschräge (ε) aufweist.

8. Zellenradschleuse gemäß einem der vorstehenden Ansprüche, **dadurch gekennzeichnet, dass** Abweiskanten (22) der Granulatdächer (19) gleiche Längen (1) aufweisen und insbesondere gleichverteilt entlang einer Querrichtung angeordnet sind, die insbesondere parallel zur Drehachse (5) des Zellenrades (4) orientiert ist.

9. Zellenradschleuse gemäß einem der Ansprüche 1 bis 7, **dadurch gekennzeichnet, dass** ein seitlicher Abstand (A) von Abweiskanten (22) der Granulatdächer (32) zu der seitlichen Einlaufkante (25) größer ist als die Länge (1) der Abweiskanten (22).

10. Zellenradschleuse gemäß einem der vorstehenden Ansprüche, **dadurch gekennzeichnet, dass** das Granulatdach (19; 32) durchgängig geneigt gegenüber einer Vertikalebene angeordnet ist, wobei das Granulatdach (19; 32) sich insbesondere bis zu der Zylinderbohrung (3) des Gehäuses (2) erstreckt.

## Claims

1. Cellular wheel sluice for granulate bulk product, with a housing (2) in which a cellular wheel (4) is rotatably mounted, wherein the housing (2) has an inlet shaft (14) for the bulk product, wherein at least two raised granulate roofs (19; 32) are arranged at the inlet shaft (14),
**characterized in that**
- a granulate groove (23, 24; 35) is arranged in each case at the transition between two granulate roofs (19; 32) and at the transition between one granulate roof (19; 32) and an inlet edge (22, 25),
- two granulate grooves (23, 24; 35) in each case run together at an intersection point (26) in the rotation direction of the cellular wheel (4).

2. Cellular wheel sluice according to claim 1, **characterized in that** a displacement angle (α) enclosed between the granulate groove (23, 24; 35) and a cellular wheel web (7) is constant at least in portions irrespective of the rotary position of the cellular wheel (4).

3. Cellular wheel sluice according to one of the preceding claims, **characterized in that** a displacement angle (α) enclosed between the granulate groove (23, 24; 35) and a cellular wheel web (7) increases at least in portions in the rotation direction (8) of the cellular wheel (4).

4. Cellular wheel sluice according to claim 2 or 3, **characterized in that** for the displacement angle (α): 30° ≤ α ≤ 90°, in particular 30° ≤ α ≤ 80°, in particular 30° ≤ α ≤ 70°, in particular 30° ≤ α ≤ 60°, in particular 35° ≤ α ≤ 50° and in particular 40° ≤ α ≤ 45°.

5. Cellular wheel sluice according to any of the preceding claims, **characterized in that** the granulate groove (23, 24; 35) has a constant cross-sectional area along the groove course.

6. Cellular wheel sluice according to any of the preceding claims, **characterized in that** the granulate groove (23, 24; 35) has an opening angle (β) oriented relative to an interior (3) of the housing (2), wherein 80° ≤ β ≤ 120°, in particular 90° ≤ β ≤ 110°.

7. Cellular wheel sluice according to any of the preceding claims, **characterized in that** the granulate groove (23, 24; 35) has a demoulding chamfer (ε) facing the interior (3) of the housing (2).

8. Cellular wheel sluice according to any of the preceding claims, **characterized in that** deflection edges (22) of the granulate roofs (19) have the same lengths (1) and in particular are evenly distributed in a transverse direction which is oriented in particular parallel to the rotation axis (5) of the cellular wheel (4).

9. Cellular wheel sluice according to any of claims 1 to 7, **characterized in that** a lateral distance (A) of deflection edges (22) of the granulate roofs (32) from the lateral inlet edge (25) is greater than the length (1) of the deflection edges (22).

10. Cellular wheel sluice according to any of the preceding claims, **characterized in that** the granulate roof (19; 32) is tilted continuously relative to a vertical plane, wherein the granulate roof (19; 32) in particular extends up to the cylinder bore (3) of the housing (2).

## Revendications

1. Écluse à roue cellulaire pour des produits en vrac granulaire, comprenant un boîtier (2) dans lequel une roue cellulaire (4) est montée à rotation, le boîtier (2) présentant un puits d'entrée (14) pour le produit en vrac, au moins deux toits à granulés (19 ; 32) en relief étant disposés sur le puits d'entrée (14),
**caractérisée en ce que**
- une rainure pour granulés (23, 24 ; 35) est respectivement disposée à la transition entre deux toits à granulés (19 ; 32) et à la transition entre un toit à granulés (19 ; 32) et un bord d'entrée (22, 25),
- deux rainures pour granulés (23, 24 ; 35) se rejoignent chacune en un point d'intersection (26) dans le sens de rotation de la roue cellulaire (4).

2. Écluse à roue cellulaire selon la revendication 1, **caractérisée en ce qu'**un angle de refoulement (α) inclus entre la rainure pour granulés (23, 24 ; 35) et une nervure de roue cellulaire (7) est constant au moins par sections, indépendamment de la position de rotation de la roue cellulaire (4).

3. Écluse à roue cellulaire selon l'une quelconque des revendications précédentes, **caractérisée en ce qu'**un angle de refoulement (α) compris entre la rainure pour granulés (23, 24 ; 35) et une nervure de roue cellulaire (7) augmente au moins par sections dans le sens de rotation (8) de la roue cellulaire (4).

4. Écluse à roue cellulaire selon la revendication 2 ou 3, **caractérisée en ce que** pour l'angle de refoulement (α), on a : 30° ≤ α ≤ 90°, en particulier 30° ≤ α ≤ 80°, en particulier 30° ≤ α ≤ 70°, en particulier 30° ≤ α ≤ 60°, en particulier 35° ≤ α ≤ 50° et en particulier 40° ≤ α ≤ 45°.

5. Écluse à roue cellulaire selon l'une quelconque des revendications précédentes, **caractérisée en ce que** la rainure pour granulés (23, 24 ; 35) présente une surface de section constante le long du tracé de la rainure.

6. Écluse à roue cellulaire selon l'une quelconque des revendications précédentes, **caractérisée en ce que** la rainure pour granulés (23, 24 ; 35) présente un angle d'ouverture (β) orienté par rapport à un espace intérieur (3) du boîtier (2), où 80° ≤ β ≤ 120°, en particulier 90° ≤ β ≤ 110°.

7. Écluse à roue cellulaire selon l'une quelconque des revendications précédentes, **caractérisée en ce que** la rainure pour granulés (23, 24 ; 35) présente une pente de démoulage (ε) orientée vers l'espace intérieur (3) du boîtier (2).

8. Écluse à roue cellulaire selon l'une quelconque des revendications précédentes, **caractérisée en ce que** des arêtes de rejet (22) des toits à granulés (19) présentent des longueurs (1) identiques et sont en particulier réparties de manière identique le long d'une direction transversale qui est en particulier orientée parallèlement à l'axe de rotation (5) de la roue cellulaire (4).

9. Écluse rotatif selon l'une quelconque des revendications 1 à 7, **caractérisée en ce qu'**une distance latérale (A) entre les arêtes de rejet (22) des toits à granulés (32) et le bord d'entrée latéral (25) est supérieure à la longueur (1) des arêtes de rejet (22).

10. Écluse à roue cellulaire selon l'une quelconque des revendications précédentes, **caractérisée en ce que** le toit à granulés (19 ; 32) est disposé de manière inclinée continue par rapport à un plan vertical, le toit à granulés (19 ; 32) s'étendant en particulier jusqu'à l'alésage cylindrique (3) du boîtier (2).
